(19) Europäisches Patentamt
European Patent Office
Office européen des brevets

(11) **EP 4 575 400 B1**

(12) **EUROPEAN PATENT SPECIFICATION**

(45) Date of publication and mention of the grant of the patent:
**28.01.2026 Bulletin 2026/05**

(21) Application number: **23219946.3**

(22) Date of filing: **22.12.2023**

(51) International Patent Classification (IPC):
**G01C 21/00** (2006.01)   **G01C 21/34** (2006.01)
**A01B 69/00** (2006.01)   **B60W 40/06** (2012.01)
**E02F 9/26** (2006.01)   **G05D 1/246** (2024.01)

(52) Cooperative Patent Classification (CPC):
**G01C 21/3826; B60W 40/06; E02F 9/2045;
E02F 9/205; E02F 9/2054; E02F 9/262;
G01C 21/3407; G01C 21/3461**

(54) **OFF-ROAD ROUTING**

OFF-ROAD-ROUTING

ROUTAGE TOUT-TERRAIN

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.06.2025 Bulletin 2025/26**

(73) Proprietor: **Volvo Autonomous Solutions AB
405 08 Göteborg (SE)**

(72) Inventors:
• SJÖBERG, Johan
  **722 19 VÄSTERÅS (SE)**
• SKILLSÄTER, Calle
  **644 36 TORSHÄLLA (SE)**

(74) Representative: **Ström & Gulliksson AB
P.O. Box 4188
203 13 Malmö (SE)**

(56) References cited:
**DE-A1- 102011 078 292    GB-A- 2 562 908
US-A1- 2020 015 401    US-A1- 2021 396 530**

**Description**

**TECHNICAL FIELD**

The disclosure relates generally to routing planning. In particular aspects, the disclosure relates to off-road routing. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

All vehicle requires routing to be safely operated. Generally, an operator of the vehicle surveils a surrounding area and controls the vehicle to avoid obstacles. Autonomous machines generally require routes that are pre-recorded or computed on the fly using for instance optimal control or similar methods.

In quarries and other very muddy conditions, the routing easily gets challenging due to puddles, wheel tracks or other obstacles appearing almost randomly. Even manually operated vehicles are at risk of getting stuck in puddles if the puddle appears shallower than it is.

Having an autonomous or manually operated vehicle get stuck or damaged in an off-road area may cause costly downtime and the stuck or damaged vehicle may present an obstacle in itself preventing further work in the area.

US 2021/396530 A1 discloses methods, systems and apparatus for determining asset efficiency which may involve determining of road segment conditions. US 2020/015401 A1 discloses an object-collection system including a vehicle and a camera connected to the vehicle. DE 10 2011 078292 A1 discloses a method for detecting an image of a surrounding area of a vehicle for calculating a degree of trafficability. GB 2562908 A discloses techniques and examples pertaining to vehicle water wading safety.

**SUMMARY**

According to a first aspect of the disclosure, a computer system comprising processing circuitry is presented. The processing circuitry is configured to obtain map data for route planning within a confined off-road area, obtain, based on sensor data of a first off-road vehicle, position data and size data of a first obstacle within the confined off-road area, obtain classification data of the first obstacle, determine a first required traction capability for traversing the first obstacle based on the size data and the classification data, and update the map data with the position data, size data and the first required traction capability for traversing the first obstacle. A technical benefit may include ensuring that map data of the confined off-road area is up to date with required traction capabilities for traversing the obstacles. This enables vehicles routed in the confined off-road area to ignore traversable obstacles and avoid obstacles that cannot be traversed by a specific vehicle.

Optionally in some examples, including in at least one preferred example, the processing circuitry is further configured to obtain the classification data based on engagement of the first obstacle by a work attachment of the first off-road vehicle. A technical benefit may include providing accurate classification data comprising details not possible to accurately estimate without engagement of the object, such as weight, viscosity etc.

According to the invention, the processing circuitry is further configured to obtain a request for route planning of a second vehicle comprising an indicator of a traction capability of the second vehicle, determine routing map data for the second vehicle based on the map data, wherein obstacles having a first required traction capability being lower than or equal to the traction capability of the second vehicle are removed from the routing map data. A technical benefit may include providing accurate map data relevant for traction capabilities of a specific vehicle.

Optionally in some examples, including in at least one preferred example, the processing circuitry is further configured to determine a second required traction capability and an associated minimum travel speed for traversing the first obstacle based on the size data and the classification data, and update the map data with the second required traction capability and the associated minimum travel speed. A technical benefit may include providing further accurate map data relevant for traction capabilities of a specific vehicle.

Optionally in some examples, including in at least one preferred example, the processing circuitry is further configured to estimate speeds of the second vehicle at positions of obstacles of the routing map data, and remove obstacles from the routing map data having an associated minimum travel speed being greater than the estimated speed of the second vehicle at positions of the associated obstacle and wherein the second required traction capability of the obstacle is lower than the traction capability of the second vehicle. A technical benefit may include providing further accurate map data relevant for traction capabilities of a specific vehicle.

Optionally in some examples, including in at least one preferred example, the processing circuitry is further configured to determine a third required traction capability and an associated maximum travel speed for traversing the first obstacle based on the size data and the classification data, and update the map data with the third required traction capability and the associated maximum travel speed. A technical benefit may include providing further accurate map data relevant for traction capabilities of a specific vehicle.

Optionally in some examples, including in at least one preferred example, the processing circuitry is further configured to estimate speeds of the second vehicle at positions of obstacles of the routing map data, and remove obstacles from the routing map data having an associated maximum travel speed being lower than the estimated speed of the second vehicle at positions of the associated obstacle and wherein the third required traction capability of the obstacle is lower than the traction capability of the second vehicle. A technical benefit may include providing further accurate map data relevant for traction capabilities of a specific vehicle.

Optionally in some examples, including in at least one preferred example, the processing circuitry is further configured to obtain a target destination and a current location of the second vehicle within the confined off-road area, determine a route for the second vehicle based on a current location of the second vehicle, the target destination and the routing map data, and provide the route to the second vehicle. A technical benefit may include provisioning of an efficient route in a stochastic environment where only obstacles relevant for the specific second vehicle are considered.

Optionally in some examples, including in at least one preferred example, the classification data comprises one or more of an indication of a weight of the first obstacle, and indication of a viscosity of the first obstacle, an indication of a movability of the first obstacle, an indication of a type of the first obstacle.

Optionally in some examples, including in at least one preferred example, the size data comprises at least one of an indication of a height of the first obstacle, an indication of a depth of the first obstacle, or an indication of a circumference of the first obstacle.

Optionally in some examples, including in at least one preferred example, the confined off-road area comprises at least a portion of a mining site.

Optionally in some examples, including in at least one preferred example, the processing circuitry is further configured to obtain position data and size data of the first obstacle based on sensor data of the work attachment of the first off-road vehicle.

Optionally in some examples, including in at least one preferred example, the processing circuitry is further configured to obtain: a request for route planning of a second vehicle comprising an indicator of a traction capability of the second vehicle, determine routing map data for the second vehicle based on the map data, wherein obstacles having a first required traction capability being lower than or equal to the traction capability of the second vehicle are removed from the routing map data; determine a second required traction capability and an associated minimum travel speed for traversing the first obstacle based on the size data and the classification data, and update the map data with the second required traction capability and the associated minimum travel speed; estimate speeds of the second vehicle at positions of obstacles of the routing map data, and remove obstacles from the routing map data having an associated minimum travel speed being greater than the estimated speed of the second vehicle at positions of the associated obstacle and wherein the second required traction capability of the obstacle is lower than the traction capability of the second vehicle; determine a third required traction capability and an associated maximum travel speed for traversing the first obstacle based on the size data and the classification data, and update the map data with the third required traction capability and the associated maximum travel speed; estimate speeds of the second vehicle at positions of obstacles of the routing map data, and remove obstacles from the routing map data having an associated maximum travel speed being lower than the estimated speed of the second vehicle at positions of the associated obstacle and wherein the third required traction capability of the obstacle is lower than the traction capability of the second vehicle; obtain a target destination and a current location of the second vehicle within the confined off-road area, determine a route for the second vehicle based on a current location of the second vehicle, the target destination and the routing map data, and provide the route to the second vehicle; and obtain position data and size data of the first obstacle based on sensor data of the work attachment of the first off-road vehicle; wherein the classification data comprises one or more of an indication of a weight of the first obstacle, and indication of a viscosity of the first obstacle, an indication of a movability of the first obstacle, an indication of a type of the first obstacle; the size data comprises at least one of an indication of a height of the first obstacle, an indication of a depth of the first obstacle, or an indication of a circumference of the first obstacle; and the confined off-road area comprises at least a portion of a mining site.

According to a second aspect of the disclosure, a vehicle, comprising the computer system of the first aspect and a work attachment is presented.

According to a third aspect of the disclosure, a computer-implemented method is presented. The method comprises obtaining, by a processing circuitry of a computer system, map data for route planning within a confined off-road area, obtaining, by the processing circuitry of the computer system, based on sensor data of a first off-road vehicle, position data and size data of a first obstacle within the confined off-road area, obtaining, by the processing circuitry of the computer system, based on engagement of the first obstacle by a work attachment of the first off-road vehicle, classification data of the first obstacle, determining, by the processing circuitry of the computer system, a first required traction capability for traversing the first obstacle based on the size data and the classification data, and updating, by the processing circuitry of the computer system, the map data with the position data, size data and the first required traction capability of the first obstacle.

According to a fourth aspect of the disclosure, a computer program product comprising program code for performing, when executed by a processing circuitry, the method of the third aspect.

According to a fifth aspect of the disclosure, A non-transitory computer-readable storage medium comprising instructions, which when executed by a processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

**BRIEF DESCRIPTION OF THE DRAWINGS**

Examples are described in more detail below with reference to the appended drawings.

FIG. 1 is an exemplar perspective view of a confined off-road environment according to an example.
FIG. 2 is a schematic view of a computer system according to an example.
FIG. 3 is a block diagram of a computer system according to an example.
FIG. 4 is a planar view of a first vehicle according to an example.
FIG. 5 is a schematic view of a route planner according to an example.
FIG. 6 is a schematic view of a computer system according to an example.
FIG. 7 is a block diagram of a method according to an example.
FIG. 8 is a schematic view of a computer program produce according to an example.
FIG. 9 is a schematic view of a site management system according to an example.
FIG. 10 is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

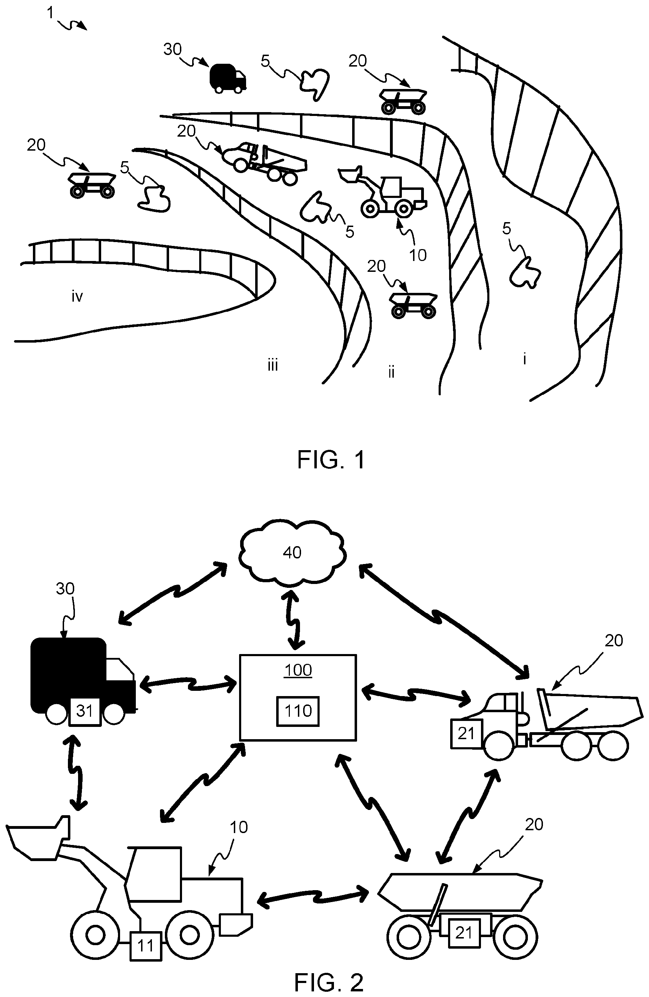

In **FIG. 1,** an exemplary confined off-road area **1** is shown. The confined off-road area **1** is a quarry, and this will be used to exemplify the teachings of the present disclosure. However, the present disclosure is in no way limited to confined off-road areas **1** in the form of quarries, but other confined off-road areas are will within the scope such as, but not limited to, areas of logging, mining etc. The confined off-road area **1** of **FIG. 1** quarry comprising a fist level **i,** a second level **ii,** a third level **iii,** and a fourth level **iv,** wherein the first level **i** is a top level and the fourth level **iv** is a bottom level. In the quarry, loaders **10** (first vehicles **10**) are operating to load material onto haulers **20** (second vehicles **20).** In **FIG. 1,** two types of haulers **20** are shown, an autonomous hauler and an operator controlled hauler. Other vehicles **30** (third vehicles **30**) may be present in the quarry such as trucks or other vehicles for transportation of personnel. Scattered throughout the confined off-road area **1** are obstacles **5**. The obstacles **5** may be puddles of mud, blocks of stone, wheel tracks, damaged or stuck vehicles etc. Any routing (manual or autonomous) of vehicles **10, 20, 30** within the confined off-road area **1** is advantageously configured to avoid the obstacles **5.** To this end, map data of the confined off-road area **1** generally comprise locations of obstacles **5** within the confined off-road area **1.**

Due to the volatile nature of the obstacles **5,** obstacles **5** may change in nature, disappear och occur seemingly randomly within the confined off-road area **1.** A sudden rain may create deep puddles and muddy roads that completely change the map data when it comes to obstacles. A few hours of sun may dry out a previously muddy road to create difficult (or impossible) to traverse wheel tracks. The inventors behind the present disclosure have realized, through inventive thinking and thorough research, that it is advantageous to update obstacle data of the map data not only based on new obstacles **5,** but also based on specific features of the obstacle **5.**

In **FIG. 2,** a schematic view of a computer system **100** is shown. The computer system **100** comprises processing circuitry **110** configured to perform, or cause performance of one or more actions, tasks or features relating to teachings of the present disclosure. In **FIG. 2** the computer system **100** is in communication, advantageously wirelessly, with one or more vehicles **10, 20, 30** within the confined off-road area **1.** The computer system **100** may, in some examples, further be in communication with a cloud server **40.** To this end, the vehicles **10, 20, 30** comprises processing circuitry **11, 21, 31** for controlling, or causing communication, with the computer system **100.**

As emphasis of the present application is off-road routing, details of all features of the vehicles **10, 20, 30** within the confined off-road area **1** will be kept at a minimum. However, as the skilled person will appreciate, the vehicles **10, 20, 30** comprises all necessary vehicle units and associated functionality such that it may operate as the skilled person would expect of a vehicle **10, 20, 30,** such as a powertrain, chassis, and various control systems. However, a vehicle **10, 20, 30** of the present disclosure comprises one or more propulsion sources. The propulsion source may be any suitable propulsion source exemplified by, but not limited to, one or more or a combination of an electrical motor, a combustion engine such as a diesel, gas or gasoline powered engine. The vehicle **10, 20, 30** further comprises an energy source suitable for providing energy for the propulsion source. That is to say, if the propulsion source is an electrical motor, a suitable energy source would be a battery or a fuel cell. The vehicle **10, 20, 30** further comprises sensor circuitry arranged to detect, measure, sense or otherwise obtain data relevant for operation of the vehicle **10, 20, 30.** The data relevant for operation of the vehicle **10, 20, 30** may be exemplified by, but not limited to, one or more of a speed of the vehicle **10, 20, 30,** a weight of the vehicle **10, 20, 30,** an inclination of the vehicle **10, 20, 30,** a status (state of charge, fuel level etc.) of the energy source of the vehicle **10, 20, 30** etc.

In order to communicate with the computer system **100,** the vehicle **10, 20, 30** may comprise communications circuitry configured for communication with, to the vehicle **10, 20, 30,** external devices. The communications circuitry is advantageously a communications circuitry configurable to provide a wireless communication interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc.

As partly indicated in **FIG. 2** the vehicles **10, 20, 30** may communicate directly with each other and/or meshed through computer system **100,** or other vehicles **10, 20, 30.** Communication with the other vehicles **10, 20, 30** may be provided by the previously mentioned wireless interfaces, and/or any suitable vehicle-to-vehicle (V2V) communications protocol exemplified by, but not limited to Dedicated Short-Range Communications (DSRC), Cellular Vehicle-to-Everything (C-V2X), IEEE 802.11p, LTE-V (LTE-V2X), 5G NR (New Radio) V2X, etc.

The vehicle **10, 20, 30** may further be operatively connected to a Global Navigation Satellite System (GNSS) exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10, 20, 30** may be configured to utilize data obtain from the GNSS **10, 20, 30** to determine a geographical location of the vehicle **10, 20, 30.**

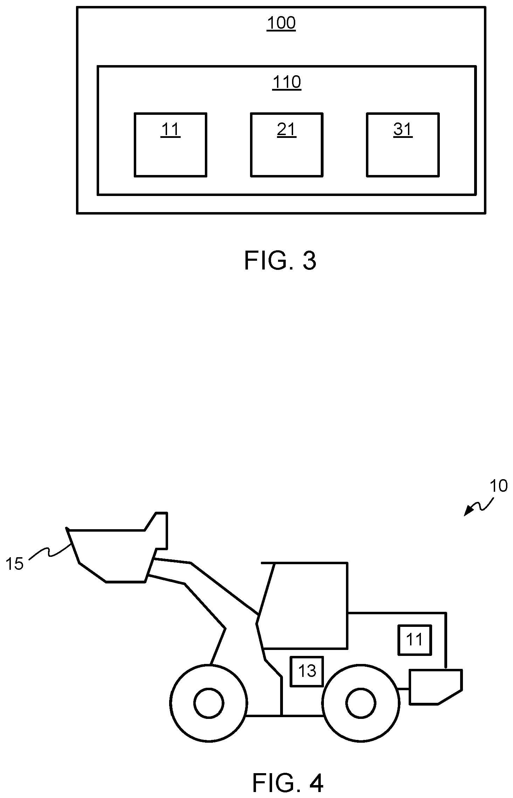

It should be mentioned that the centralized description of the computer system **100** shown in **FIG. 2** is one example. In **FIG. 3,** another example of a computer system **100** according to the present disclosure is presented. In **FIG. 3,** the processing circuitry **110** of the computer system **100** comprises a processing circuitry **11** of one or more loaders **10** within the confined off-road area **1.** Optionally, in some examples, the processing circuitry **110** of the computer system **100** may further comprises a processing circuitry **21** of one or more haulers **20** within the confined off-road area **1.** Additionally, or alternatively, in some examples, the processing circuitry **110** of the computer system **100** may further comprises a processing circuitry **31** of one or more other vehicles **30** within the confined off-road area **1.**

In **FIG. 4,** an exemplary loader **10** is shown. The loader **10** comprises processing circuitry **11** configured to e.g. communicate with the computer system **100** or provide, or cause provisioning of, any other tasks, features or functions presented herein being relevant for the loader **10.** The loader **10** further comprises sensor circuitry **13** configured to, as mentioned, detect, measure, sense or otherwise obtain data relevant for operation of the loader **10.** The loader **10** further comprises a work attachment **15.** In **FIG. 4,** the work attachment **15** is shown as a bucket attachment, but the work attachment **15** may be any suitable work attachment **15** such as, but not limited to a crane attachment, a fork attachment, an auger attachment, a grapple attachment, a sweeper attachment, a mulcher attachment, a breaker attachment (hydraulic hammer attachment), a blade attachment etc. In some examples, the loader **10** comprises more than one work attachment **15.**

Although only the loader **10** is shown comprising a work attachment **15,** any vehicle **10, 20, 30** of the present disclosure may comprise a suitable work attachment **15.** Although a majority of examples, features and functions exemplified herein are in reference to a loader **10** with a bucket tip work attachment **15,** the skilled person will appreciate that any combination of vehicle **10, 20, 30** and work attachment **15** may be utilized to achieve effects, and functions presented herein.

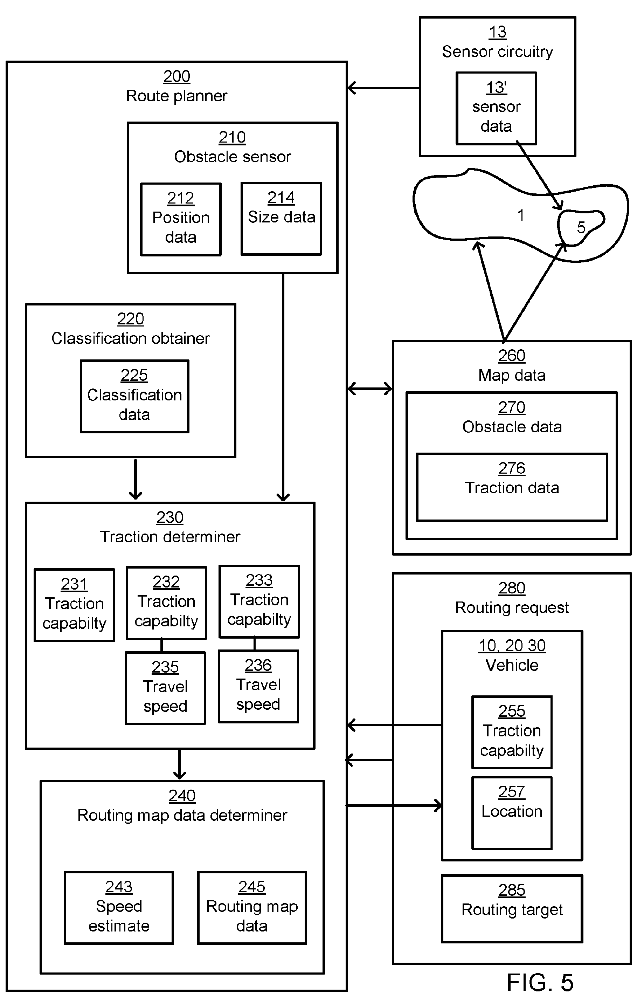

In **FIG. 5** an exemplary software architecture of a route planner **200** is shown. The route planner **200** may be implemented as part of the computer system **100,** and/or the processing circuitry **110** of the computer system **100** may be configured to perform, or cause performance of the functions, features or examples of the route planner **200.**

The route planner **200** is configured to obtain map data **260** for route planning within the confined off-road area **1.** The map data **260** may be obtained from a storage device that may e.g. be external to the route planner **200,** connected to the cloud server **40** and/or form part of the computer system **100.** The map data **260** may comprise, or is configured to comprise, obstacle data **270.** The obstacle data **270** is associated with obstacles **5** within the confined off-road area **1.** The obstacle data **270** will be further explained in the following. The map data **260** may further comprise a routing target **285.** The routing target **285** (navigation target, navigation goal, routing destination etc.) indicate a destination for a vehicle **10, 20, 30** within the confined off-road area **1.** In some examples, the routing target **285** is separate from the map data **260.**

The route planner **200** may comprise an obstacle sensor **210.** The obstacle sensor **210** may be configured to obtain position data **212** and/or size data **214** of an obstacle **5** within the confined off-road area **1.** The positon data **212** of the obstacle **5** and the size data **214** of the obstacle **5** may be obtained based on sensor data **13'.** The sensor data **13'** may be provided by the sensor circuitry **13** of the first vehicle **10.**

In a specific, non-limiting example, the positon data **212** of the obstacle **5 is** obtained from a GPS sensor of the first vehicle **10** at a point in time when the first vehicle **10** is at the obstacle **5.** In some examples, the positon data **212** of the obstacle **5** is obtained based on a location of the work attachment **15** of the first vehicle **10.**

The location of the work attachment **15,** e.g. a bucket of a loader **10,** is generally accurately known at the loader **10** based on GPS data of the loader **10** and the relative location of the bucket tip in relation to the location of the GPS sensor. The size data **214** of the obstacle **5** may be estimated by visual inspection of the obstacle **5** and/or by the first vehicle **10** traveling around the obstacle **5** sensing an outline, or a plurality of points at a circumference of the obstacle **5.** The bucket may be placed at a top of the obstacle **5** to obtain a height of the obstacle **5,** or immersed into the obstacle **5** (hope, puddle etc.) to obtain a depth of the obstacle **5.**

The size data **214** may comprise any data suitable to indicate a size of the obstacle **5.** The size data **215** may comprise a height of the obstacle **5,** an indication of a depth of the obstacle **5,** and/or an indication of a circumference of the obstacle **5.**

The route planner **200** further comprises a classification obtainer **220.** The classification obtainer **220** may a communications device and/or a processing device configured to obtain classification data **225** of the obstacle **5.** To exemplify, the classification obtainer **220** may be configured to obtain image data of the obstacle **5,** process the image data (or provide the image data for processing) to determine classification data **225** based on e.g. image recognition and similar processing techniques. The classification data **225** of the obstacle **5** may comprise a type of the obstacle **5.** The type of the obstacle **5** may be one of e.g. a rock, a boulder, a hole, a water crossing, a puddle, a mud pit, a cam, a pile of snow, a pile of gravel, loose gravel, loose sand, a patch of ice, a steep incline, a steep decline, a tree or other vegetation, a pothole, construction debris, construction equipment etc. The classification data **225** of the obstacle **5** may additionally, or alternatively, comprise one or more of an indication of a weight of the obstacle **5,** and indication of a viscosity of the obstacle **5,** an indication of a movability of the obstacle **5** and/or an indication of a type of the obstacle **5.**

In one specific, non-limiting example, the classification obtainer **220** is an obstacle engager **220.** The obstacle engager **220** is configured to engage/touch obstacles **5** to determine classification data **225** of the obstacle **5.** The obstacle engager **220** may engage the obstacle **5** with the work attachment **15** of the first vehicle **10.**

In a further specific, non-limiting example, classification data **225** may be determined by an operator of a loader **10** engaging an obstacle **5** by the work attachment **15** of the loader **10,** i.e. the bucket. The operator may push the obstacle **5** with the bucket and the obstacle engager **220** may obtain a torque or corresponding exerted by the propulsion source of the loader **10.** Additionally, or alternatively, the loader **10** may try and lift the obstacle **5** and weight sensors **13** of the bucket may be utilized to estimate a weight of the obstacle **5.** The type of the obstacle **5** may be provided directly by an operator of the vehicle **10,** or by the operator in conjunction with data obtained by engaging the obstacle **5.** To exemplify, by immersing the bucket into a puddle, the operator may determine of the puddle is deep enough to be an obstacle **5** and if the puddle is filled with water or mud. Based on how water or mud trickles from the bucket when it is removed from the puddle, a viscosity may be determined.

It should be mentioned that the classification data **225** is not necessarily absolute data in absolute terms such as newton-second per square meter N·s/m$^2$ for viscosity, but may relative terms such as percentage % in reference to a known measure, or subjective such as high, medium, low, 0-100, or any other data suitable for conveying the specific classification data **225.**

Classifying obstacles **5** based on their characteristics (e.g. type etc.) helps in understanding their potential impact on vehicle and equipment performance. As will be explained, this helps in deciding strategies for safely navigating through the confined off-road area 1.

The router planner **200** further comprises a traction determiner **230.** The traction determiner **230** is configured to determine a first required traction capability **231** for traversing the obstacle **5** based on the size data **214** and the classification data **225.** The first required traction capability **231** is provided in a format, or convertible to a format, that may be mapped to traction capabilities **255** of vehicles **10, 20, 30** operating within the confined off-road area **1.** The first traction capability of a vehicle **10, 20, 30** may be determined based on e.g. chassis (a robust chassis and off-road suspension system generally allow a vehicle to absorb shocks and impacts while maintaining stability), suspension (a well-designed suspension helps keep all wheels in contact with the ground, improving traction and maneuverability), ground clearance (a distance between the lowest point of the vehicle's **10, 20, 30** undercarriage and the ground, higher ground clearance prevents the vehicle **10, 20, 30** from getting stuck on uneven surfaces or high obstacles), traction and differential systems (vehicles provided with features like all-wheel drive (AWD), four-wheel drive (4WD), or differential locks generally have better traction on slippery or uneven surfaces compared to vehicles **10, 20, 30** without such systems), tires (off-road tires with aggressive tread patterns provide better grip on challenging surfaces like mud, sand, and rocks), water fording depth (some off-road vehicles have the capability to ford through water bodies without causing damage to vehicle components), engine power and torque (sufficient power and torque enable a vehicle **10, 20, 30** to overcome resistance caused by challenging terrains and obstacles), weight distribution (a well-balanced weight distribution helps maintain stability while traversing obstacles, especially on uneven terrain), structural strength (vehicles **10, 20, 30** designed with strong and durable materials can withstand impacts and stresses encountered during off-road driving) etc.

In a specific, non-limiting example, assume that the size data **214** of the obstacle **5** indicate a height of 53 cm and a circumference of 5 m, the classification data **225** indicates that the obstacle **5** is a boulder. The traction determiner **230** may be configured to determine the first required traction capability **231** to indicate a ground clearance of at least 60 cm, at least 4WD and tires having a diameter greater than 55 cm. The first required traction capability **231** may be one summarized required traction capability indicator, a set of required traction capabilities or indicate a specific type of vehicles **10, 20, 30.** For instance, the exemplified obstacle **5** may be possible to traverse by loaders **10** and haulers **20** but not by other vehicles **30.**

The traction determiner **230** may further be configured to determine a second required traction capability **232** for traversing the obstacle **5** based on the size data **214** and the classification data **225.** The second required traction capability **232** is associated with a minimum travel speed **235.** The traction determiner **230** may configured to determine the minimum travel speed **235** associated with the second required traction capability **232.** In some examples, the minimum travel speed **235** is a predetermined travel speed that may be configured per vehicle **10, 20, 30** based on e.g. requirement for the confined off-road area **1,** fuel efficiency, vehicle utilization etc. The second traction capability **232** is beneficial as it allows vehicles to traverse a specific obstacle **5** if a travel speed of the vehicle **10, 20, 30** is greater than the minimum travel speed **235** associated with the obstacle **5.**

In a specific, non-limiting example, assume that the size data **214** of the obstacle indicate a depth of 20 cm and a width of 6 m, the classification data **225** indicate that the obstacle **5** is a mud pit. The first required traction capability **231** indicates that only loaders **10** and haulers **20** are capable of traversing the obstacle. However, assuming that other vehicles **30,** for instance a truck, are traveling at a speed greater than 20 km/h, also other vehicles **30** are able to traverse the mud pit. In this example, the traction determiner **230** may determine the second required traction capability **232** to indicate that all vehicles **10, 20, 30** may traverse the obstacle **5** and determine the minimum travel speed **235** associated with the second required traction capability **232** to be 20 km/h.

The traction determiner **230** may further be configured to determine a third required traction capability **233** for traversing the obstacle **5** based on the size data **214** and the classification data **225.** The third required traction capability **233** is associated with a maximum travel speed **236.** The traction determiner **230** may configured to determine the maximum travel speed **236** associated with the third required traction capability **233.** In some examples, the maximum travel speed **236** is a predetermined travel speed that may be configured per vehicle **10, 20, 30** based on e.g. requirement for the confined off-road area **1,** fuel efficiency, vehicle utilization etc. The third traction capability **233** is beneficial as it allows vehicles to traverse a specific obstacle **5** if a travel speed of the vehicle **10, 20, 30** is lower than the maximum travel speed **236** associated with the obstacle **5.**

In a specific, non-limiting example, assume that the size data **214** of the obstacle indicate a depth of 35 cm and a width of 4 m, the classification data **225** indicate that the obstacle **5** is a puddle (pool of water). The first required traction capability **231** indicates that only loaders **10** and haulers **20** are capable of traversing the obstacle. However, assuming that other vehicles **30,** for instance a truck, are traveling at a speed greater than 20 km/h would water board and skid across the obstacle **5.** But the same truck, if travelling at speeds below 20 km/h, would sink and achieve good traction at the bottom of the puddle. In this example, the traction determiner **230** may determine the third required traction capability **233** to indicate that all vehicles **10, 20, 30** may traverse the obstacle **5** and determine the maximum travel speed **236** associated with the third required traction capability **232** to be 20 km/h.

The route planner **200** may update the map data **260** with the position data **212** and/or the size data **214** of the obstacle **5.** If the obstacle **5** is not already associated with obstacle data **270** of the map data **260,** new obstacle data **270** may be created comprising data position data **212** and optionally size data **214** provided by the obstacle sensor **210.** The route planner **200** may update the map data **260** with the classification data **225** of the obstacle **5,** and the first required traction capability **231** associated with the obstacle **5.** If determined, the route planner **200** may update the map data **260** with the second required traction capability **232** and associated minimum travel speed **225,** and/or the third required traction capability **233** and associated maximum travel speed **226.** This allows the map data **260** to be utilized for route planning by any device having access to the map data **260.** Any vehicle **10, 20, 30** may update the map data by providing positon data **212,** size data **214,** classification data **225,** first required traction capability **231,** second required traction capability **232** and associated minimum travel speed **235** and/or third required traction capability **233** and associated maximum travel speed **236.** The functionality of the obstacle sensor **210** may be provided by any one vehicle **10, 20, 30,** or a collaboration of any vehicles **10, 20, 30.** The functionality of the obstacle engager **220** may be provided by any one vehicle **10, 20, 30,** or a collaboration of any vehicles **10, 20, 30.** The functionality of the traction determiner **230** may be provided by any one vehicle **10, 20, 30,** or a collaboration of any vehicles **10, 20, 30.**

The route planner **200** may comprise a routing map data determiner **240.** The routing map data determiner **240** is configured to provide routing map data **245.** The routing map data determiner **240** may be configured to provide routing map data **245** for a specific vehicle **10, 20, 30,** a specific type of vehicle **10, 20, 30** or for vehicles **10, 20, 30** having a specific traction capability **255.**

The routing map data determiner **240** is configured to obtain a routing request **280,** i.e. a request for route planning within the confined off-road area **1.** The routing request **280** comprises an indication of a traction capability **255** of the vehicle **10, 20, 30** to be routed. As mentioned above, the traction capability **255** may be a simple indication of a type of vehicle **10, 20, 30.** Additionally, or alternatively, the traction capability **255** may comprise one or more of an indication of a chassis of vehicle **10, 20, 30,** a suspension of vehicle **10, 20, 30,** a ground clearance of vehicle **10, 20, 30,** a traction system of vehicle **10, 20, 30,** a differential systems of vehicle **10, 20, 30,** a differential lock configuration of vehicle **10, 20, 30,** tires of vehicle **10, 20, 30,** a water fording depth of vehicle **10, 20, 30,** an engine power of vehicle **10, 20, 30,** an engine torque of vehicle **10, 20, 30,** a weight distribution of vehicle **10, 20, 30** and/or a structural strength of vehicle **10, 20, 30.**

The routing map data determiner **240** may be configured to provide routing map data **245** for the vehicle **10, 20, 30** of the routing request by **280** modifying the map data **260** such that any obstacles **5** the vehicle **10, 20, 30** of the routing request **280** is capable of traversing, are removed from the map data **260.** If the routing map data **245** initially is a copy of the map data **260,** the routing map data determiner **240** may be configured to remove any obstacles **5** having a first required traction capability **231** that is lower than (or equal to) the traction capability of the vehicle **10, 20, 30** of the routing request **280.**

Additionally, or alternatively, the routing map data determiner **240** may be configured to determine speed estimates **243** of the vehicle **10, 20, 30** of the routing request **280** at locations of obstacles **5** of the routing map data **245.** If the estimated speed **243** is greater than the minimum travel speed **235** associated with a specific obstacle **5** and the second required traction capability **232** of the specific obstacle **5** is lower than, or equal to, the traction capability of the vehicle **10, 20, 30** of the routing request **280,** the specific obstacle **5** may be removed from the routing map data **245.** Correspondingly, if the estimated speed **243** is lower than the maximum travel speed **236** associated with a specific obstacle **5** and the third required traction capability **233** of the specific obstacle **5** is lower than, or equal to, the traction capability of the vehicle **10, 20, 30** of the routing request **280,** the specific obstacle **5** may be removed from the routing map data **245**

It should be mentioned that any comparison, measurement, or limit generally includes sufficient margin for error to ensure, within reason, that required traction capabilities **231, 232, 233** never are violated.

The routing map data **245** may be provided to the computer system **100** for future route planning. In some examples, new (updated) routing map data **245** may be provided each time an obstacle **5** us updated or modified by the route planner **200.** The routing map data **245** may be stored at suitable storage circuitry of the computer system **100.** Additionally, or alternatively, the routing map data **245** may be provided to the vehicle **10, 20, 30** of the routing request **280.**

In some examples, the routing request **280** may comprise a routing target **285,** i.e. a target destination, and a current location **257** of the vehicle **10, 20, 30** of the routing request **280.** In some examples, the current location **257** may be a fixed, or pre-determined location which may be the case in e.g. mines where haulers **20** generally offload that the same location. The route planner **200** may be configured to determine a route for the vehicle **10, 20, 30** of the routing request **280** based on the routing target **285** and the routing map data **245.** The determined route may be provided to the vehicle **10, 20, 30** of the routing request **280,** to the computer system **100** and/or stored at suitable storage circuitry of the computer system **100.**

The routing request **280** may be provided to the route planner **200** by a first vehicle **10.** The first vehicle **10** may be loader **10** requesting a hauler **20** to arrive at a routing target **285** of choosing by an operator of the loader **10.**

In a specific non-limiting example, the route planner **200** is utilizing dynamically optimized paths. This is beneficial in areas and location wherein routes change often. This is the case in mining areas where the loader **10** works at different locations and the hauler **20** is requested to arrive at different locations each load cycle. A optimal control problem for the path of hauler **20** may be formulated as minimizing $x(t)$, $u(t)$ in $\int_0^T L\big(x(t), u(t)\big) dt$, subject to:

$$\begin{cases} x(0) - x_0 = 0 \\ \dot{x}(t) - f\big(x(t), u(t)\big) = 0, t \in [0, T] \\ h\big(x(t), u(t)\big) \le 0, t \in [0, T] \end{cases}$$ Where

the first equation from the top indicate a fixed initial value, the second an ODE model and the third path constraints. The cost function L (typically distance or time) is minimized under the constraints that the path must fulfil vehicle requirements and some additional path constraints that may be obstacles **5.** The optimization may be carried out in two steps where a first step comprise providing an initial guess using e.g. a graph searching method such as A* which is followed by solving of a continuous optimization method such as a nonlinear program. In this way, the convergence benefit of the graph searching method is combined with the optimization capacity of the NLP.

To further exemplify, in off-road scenarios, a challenge is that the environment of the confined off-road area **1** may change a lot over a short period of time. One such example are the benches where material is extracted in a mine (see e.g. **FIG. 1).** A dry day, the roads may be solid, rock hard roads that are easy to traverse. However, if it is raining or snowing, the confined off-road area **1** may get almost inaccessible due to a vast amount of mud and a lot of deep puddles. When the operator of the loader **10** starts to use a specific loading area, the first step is to secure that potential obstacles **5** are input to the computer system **100.** This is extra beneficial for obstacles **5** such as deep puddles, since such obstacles **5** may not be detected by the sensors circuitry **13** on autonomous hauler **20.** If such obstacles **5** are not mapped, a hauler **20** would not stop but will drive into the obstacle **5** and potentially get stuck creating significant down time to get the hauler **20** loose again. As indicated herein, the operator of the loader **10** may categorize the obstacle **5,** for instance, how deep the puddle is or how big a specific rock is, so that they computer system **100** may take the obstacle **5** under consideration computing routes for different kind of vehicles **10, 20, 30** of the confined off-road area **1,** specifically since different vehicles **10, 20, 30** will have different traction capabilities, i.e. different terrain ability. As a consequence, an obstacle **5** that is classified as an obstacle **5** for a hauler **30** may not be classified as an obstacle **5** for a hauler **10.**

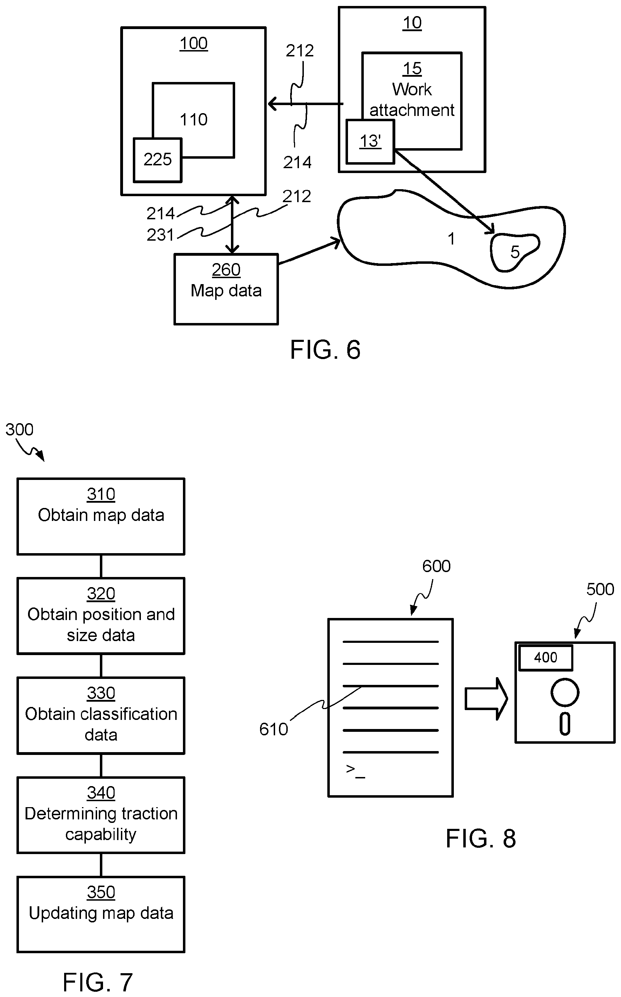

In **FIG. 6,** a block diagram of the computer system **100** according to one example is shown. As mentioned, the computer system **100** comprises processing circuitry **110.** The processing circuitry **110** is configured to obtain map data **260** for route planning within the confined off-road area **1.** The processing circuitry **110** is further configured to obtain, based on sensor data **13'** of a first off-road vehicle **10,** position data **212** and size data **214** of a first obstacle **5** within the confined off-road area **1.** In **FIG. 6,** the processing circuitry **110** is further configured to obtain, based on engagement of the first obstacle **5** by the work attachment **15** of the first off-road vehicle **10,** classification data **225** of the first obstacle **5.** The processing circuitry **110** is further configured to determine the previously presented first required traction capability **231** for traversing the first obstacle **5** based on the size data **214** and the classification data **225,** and to update the map data **260** with the position data **212,** size data **214** and the first required traction capability **231** for traversing the first obstacle **5.** The computer system **100** shown in **FIG. 6** may be modified, expanded and or configured to perform, or cause performance of any of the features, functions or examples presented herein, specifically those presented with reference to **FIG. 5.**

In **FIG. 7** a block diagram of an exemplary method **300** is shown. The method **300** may be a computer implemented method **300,** and functions and features of the method **300** may be performed by the processing circuitry **110** of the computer system **100.**

The method **300** comprises obtaining **310** map data **260** for route planning within the confined off-road area **1.** The map data **310** may be obtained by any interface or from any location, device, function or processing circuitry **110** presented herein. The method **300** further comprises obtaining **320** position data **212** and size data **214** of a first obstacle **5** within the confined off-road area **1.** The position data **212** and size data **214** of the first obstacle **5** may be obtained **320** based on any interface or from any location, device, function or processing circuitry **110** presented herein. In one example, the position data **212** and size data **214** of the first obstacle **5** is obtained **320** based on sensor data **13'** of a first off-road vehicle **10.** The method **300** further comprises obtaining **330** classification data **225** of the first obstacle **5.** The classification data **225** may be obtained based on any interface or from any location, device, function or processing circuitry **110** presented herein. In one example, the classification data **225** is obtained based on engagement of the first obstacle **5** by a work attachment **15** of the first off-road vehicle **10.** The method **300** further comprises determining **340** a first required traction capability **231** for traversing the first obstacle **5.** The first required traction capability **231** may be determined according to any function, feature or example presented herein. In one example, the first required traction capability **231** is determined based on the size data **214** and the classification data **225.** The method **300** further comprises updating **350** the map data **260** with the data associated with the first obstacle **5.** The map data **260** may be updated with any data associated with the first obstacle **5** mentioned herein. In one example, the map data **260** is updated with position data **212,** size data **214** and the first required traction capability **231** of the first obstacle **5.**

The description given of the method **300** in reference to **FIG. 7** is a simplified summary and the skilled person appreciates that, and how to, extend, modify and/or adjust the method **300** to comprise any function, feature or example presented herein.

In **FIG. 8** a computer program product **400** is shown. The computer program product **400** comprises a computer program **600** and a non-transitory computer readable medium **500.** The computer program **600** may be stored on the computer readable medium **500.** The computer readable medium **500** is, in **FIG. 8,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **300** introduced herein with reference to **FIG. 7.**

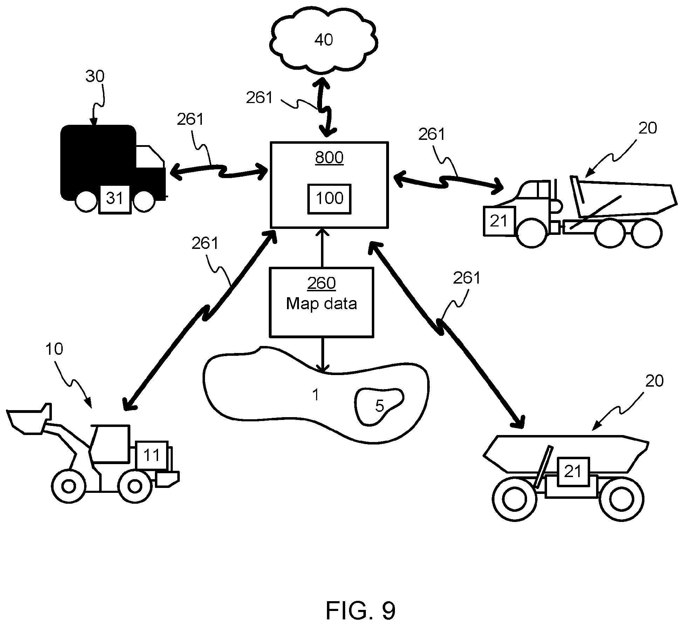

In **FIG. 9,** a schematic view of a site management system **800** is shown. The site management system **800** may comprise (or be operatively connected to) the computer system **100** as presented herein. The site management system **800** may obtain any data available to the computer system **100.** The site management system **800** may configured the computer system **100** to perform or cause any action or feature described herein.

The site management system **800** may be a software system, a hardware system or a system of both software and hardware. The site management system **800** may be configured to assist in planning, managing, and optimizing operation of an associated site, i.e. the confined off-road area **1.** The site management system **800** may be configured to e.g. schedule and monitor equipment maintenance and repair, inventory levels of materials and supplies, production and productivity metrics, safety and compliance data, employee training and development records etc.

In some examples, the site management system **800** may be configured to provide specific map data **261** associated with a specific vehicle **10, 20, 30**. The site management system **800** may obtain a traction capability **255** of the specific vehicle **10, 20, 30** and provide the specific map data **261** by e.g. removing obstacles **5** from the map data **260** having traction data **276** indicating the specific vehicle **10, 20, 30** is able to traverse the obstacle **5**. In some examples, a specific vehicle **10, 20, 30** may, e.g. upon entry into the confined off-road area **1** share traction capability **255** of the specific vehicle **10, 20, 30** and obtain specific map data **261** in response from the site management system **800**. In some examples, the site management system **800** may provide specific map data **261** to one or more vehicles **10, 20, 30** within the confined off-road area **1** periodically, and/or upon changes to the map data **260** e.g. by obstacles **5** being added, removed or updated.

In some examples, the site management system **800** may be configured to provide and/or present layered map data wherein layers may be added or removed based on a provided traction capability **255,** a provided minimum travel speed **235** and/or a provided maximum travel speed **236.**

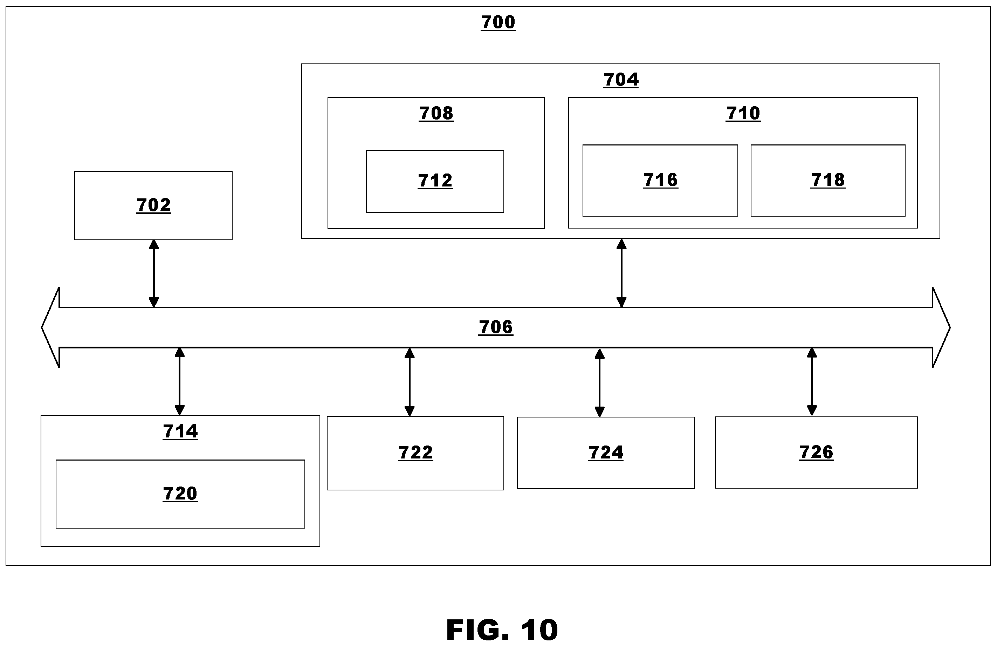

**FIG. 10** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. The computer system **700** of **FIG. 10,** may be the computer system **100** introduced with reference to **FIG. 2.** Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706**. The processing circuitry **702** may be the processing circuitry **110** introduced with reference to **FIG. 2.** The computer system **700** may include at least one computing device having the processing circuitry **702**. The system bus **706** provides an interface for system components including, but not limited to, the memory **704** and the processing circuitry **702**. The processing circuitry **702** may include any number of hardware components for conducting data or signal processing or for executing computer code stored in memory **704**. The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, obstacle code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

It is to be understood that the present disclosure is not limited to the aspects described above and illustrated in the drawings; rather, the skilled person will recognize that many changes and modifications may be made within the scope of the present invention, as defined in the appended claims. In the drawings and specification, there have been disclosed aspects for purposes of illustration only and not for purposes of limitation, the scope of the disclosure being set forth in the following claims.

## Claims

1. A computer system (100) comprising processing circuitry (110) configured to:

   obtain map data (260) for route planning within a confined off-road area (1),
   obtain, based on sensor data (13') of a first off-road vehicle (10), position data (212) and size data (214) of a first obstacle (5) within the confined off-road area (1),
   obtain classification data (225) of the first obstacle (5),
   determine a first required traction capability (231) for traversing the first obstacle (5) based on the size data (214) and the classification data (225), and
   update the map data (260) with the position data (212), size data (214) and the first required traction capability (231) for traversing the first obstacle (5)
   wherein the processing circuitry (110) is further configured to:

   obtain a request for route planning of a second vehicle (20, 30) comprising an indicator of a traction capability (255) of the second vehicle (20, 30),
   determine routing map data (245) for the second vehicle (20, 30) based on the map data (260), wherein obstacles (5) having a first required traction capability (231) being lower than or equal to the traction capability (255) of the second vehicle (20, 30) are removed from the routing map data (245).

2. The computer system (100) of claim 1, wherein the processing circuitry (110) is further configured to obtain the classification data (225) based on engagement of the first obstacle (5) by a work attachment (15) of the first off-road vehicle (10).

3. The computer system (100) of any one of claims 1 to 2, wherein the processing circuitry (110) is further configured to:

   determine a second required traction capability (232) and an associated minimum travel speed (235) for traversing the first obstacle (5) based on the size data (214) and the classification data (225), and
   update the map data (260) with the second required traction capability (232) and the associated minimum travel speed (235).

4. The computer system (100) of claim 3, wherein the processing circuitry (110) is further configured to:

   estimate speeds of the second vehicle (20, 30) at positions of obstacles (5) of the routing map data (245), and
   remove obstacles (5) from the routing map data (245) having an associated minimum travel speed (235) being greater than the estimated speed of the second vehicle (20, 30) at positions of the associated obstacle (5) and wherein the second required traction capability (232) of the obstacle (5) is lower than the traction capability (255) of the second vehicle (20, 30).

5. The computer system (100) of any one of claims 1 to 4, wherein the processing circuitry (110) is further configured to:

   determine a third required traction capability (233) and an associated maximum travel speed (236) for traversing the first obstacle (5) based on the size data (214) and the classification data (225), and
   update the map data (260) with the third required traction capability (233) and the associated maximum travel speed (236).

6. The computer system (100) of claim 5, wherein the processing circuitry (110) is further configured to:

   estimate speeds of the second vehicle (20, 30) at positions of obstacles (5) of the routing map data (245), and
remove obstacles (5) from the routing map data (245) having an associated maximum travel speed (236) being lower than the estimated speed of the second vehicle (20, 30) at positions of the associated obstacle (5) and wherein the third required traction capability (133) of the obstacle (5) is lower than the traction capability (255) of the second vehicle (20, 30).

7. The computer system (100) of any one of claims 1 to 6, wherein the processing circuitry (110) is further configured to:

   obtain a target destination (285) and a current location of the second vehicle (20, 30) within the confined off-road area (1),
   determine a route for the second vehicle (20, 30) based on a current location of the second vehicle (20, 30), the target destination (285) and the routing map data (245), and
   provide the route to the second vehicle (20, 30).

8. The computer system (100) of any one of claims 1 to 7, wherein the classification data (225) comprises one or more of an indication of a weight of the first obstacle (5), and indication of a viscosity of the first obstacle (5), an indication of a movability of the first obstacle (5), an indication of a type of the first obstacle (5); and/or wherein the size data (214) comprises at least one of an indication of a height of the first obstacle (5), an indication of a depth of the first obstacle (5), or an indication of a circumference of the first obstacle (5).

9. The computer system (100) of any one of claims 1 to 8, wherein the confined off-road area (1) comprises at least a portion of a mining site.

10. The computer system (100) of any one of claims 1 to 9, wherein the processing circuitry (110) is further configured to:
    obtain position data (212) and size data (214) of the first obstacle (5) based on sensor data (13') of the work attachment (15) of the first off-road vehicle (10).

11. A vehicle (10, 20, 30), comprising the computer system (100) of any one of claims 1 to 10.

12. A computer-implemented method (300), comprising:

   obtaining (310), by a processing circuitry (110) of a computer system (100), map data (260) for route planning within a confined off-road area (1),
   obtaining (320), by the processing circuitry (110) of the computer system (100), based on sensor data (13') of a first off-road vehicle (10), position data (212) and size data (214) of a first obstacle (5) within the confined off-road area (1),

obtaining (330) classification data (225) of the first obstacle (5),

determining (340), by the processing circuitry (110) of the computer system (100), a first required traction capability (231) for traversing the first obstacle (5) based on the size data (214) and the classification data (225), and

updating (350), by the processing circuitry (110) of the computer system (100), the map data (260) with the position data (212), size data (214) and the first required traction capability (231) of the first obstacle (5),

the method further comprising:

> obtaining, by the processing circuitry (110) of the computer system (100), a request for route planning of a second vehicle (20, 30) comprising an indicator of a traction capability (255) of the second vehicle (20, 30), determining, by the processing circuitry (110) of the computer system (100), routing map data (245) for the second vehicle (20, 30) based on the map data (260), wherein obstacles (5) having a first required traction capability (231) being lower than or equal to the traction capability (255) of the second vehicle (20, 30) are removed from the routing map data (245).

13. A computer program product (400) comprising program code (610) for performing, when executed by a processing circuitry (110), the method (300) of claim 12.

14. A non-transitory computer-readable storage medium (500) comprising instructions (610), which when executed by a processing circuitry (110), cause the processing circuitry (110) to perform the method (300) of claim 12.

**Patentansprüche**

1. Computersystem (100), umfassend Verarbeitungsschaltung (110) die zu Folgendem konfiguriert ist:

> Erlangen von Kartendaten (260) zur Routenplanung innerhalb eines begrenzten Geländes (1),
> Erlangen, basierend auf Sensordaten (13') eines ersten Geländewagens (10), von Positionsdaten (212) und Größendaten (214) eines ersten Hindernisses (5) innerhalb des begrenzten Geländes (1),
> Erlangen von Klassifizierungsdaten (225) des ersten Hindernisses (5),
> Bestimmen einer ersten erforderlichen Traktionsfähigkeit (231) zum Überqueren des ersten Hindernisses (5) basierend auf den Größendaten (214) und den Klassifizierungsdaten (225), und

Aktualisieren der Kartendaten (260) mit den Positionsdaten (212), den Größendaten (214) und der ersten erforderlichen Traktionsfähigkeit (231) zum Überqueren des ersten Hindernisses (5)

wobei die Verarbeitungsschaltung (110) ferner zu Folgendem konfiguriert ist:

> Erlangen einer Anforderung zur Routenplanung eines zweiten Fahrzeugs (20, 30), umfassend einen Indikator für eine Traktionsfähigkeit (255) des zweiten Fahrzeugs (20, 30),
> Bestimmen von Routing-Kartendaten (245) für das zweite Fahrzeug (20, 30) basierend auf den Kartendaten (260), wobei Hindernisse (5), die eine erste erforderliche Traktionsfähigkeit (231) aufweisen, die niedriger als oder gleich wie die Traktionsfähigkeit (255) des zweiten Fahrzeugs (20, 30) ist, aus den Routing-Kartendaten (245) entfernt werden.

2. Computersystem (100) nach Anspruch 1, wobei die Verarbeitungsschaltung (110) ferner konfiguriert ist, um die Klassifizierungsdaten (225) basierend auf einem Eingriff eines Arbeitsanbaugeräts (15) des ersten Geländewagens (10) in das erste Hindernis (5) zu erlangen.

3. Computersystem (100) nach einem der Ansprüche 1 bis 2, wobei die Verarbeitungsschaltung (110) ferner zu Folgendem konfiguriert ist:

> Bestimmen einer zweiten erforderlichen Traktionsfähigkeit (232) und einer assoziierten minimalen Fahrgeschwindigkeit (235) zum Überqueren des ersten Hindernisses (5) basierend auf den Größendaten (214) und den Klassifizierungsdaten (225), und
> Aktualisieren der Kartendaten (260) mit der zweiten erforderlichen Traktionsfähigkeit (232) und der assoziierten minimalen Fahrgeschwindigkeit (235).

4. Computersystem (100) nach Anspruch 3, wobei die Verarbeitungsschaltung (110) ferner zu Folgendem konfiguriert ist:

> Schätzen von Geschwindigkeiten des zweiten Fahrzeugs (20, 30) an den Positionen von Hindernissen (5) in den Routen-Kartendaten (245), und
> Entfernen von Hindernissen (5) aus den Routen-Kartendaten (245), die eine assoziierte minimale Fahrgeschwindigkeit (235) aufweisen, die größer ist als die geschätzte Geschwindigkeit des zweiten Fahrzeugs (20, 30) an Positionen des assoziierten Hindernisses (5), und wobei die zweite erforderliche Traktionsfähigkeit (232) des Hindernisses (5) niedriger ist als die Traktionsfähigkeit (255) des zweiten Fahrzeugs (20, 30).

5. Computersystem (100) nach einem der Ansprüche 1 bis 4, wobei die Verarbeitungsschaltung (110) ferner zu Folgendem konfiguriert ist:

Bestimmen einer dritten erforderlichen Traktionsfähigkeit (233) und einer assoziierten maximalen Fahrgeschwindigkeit (236) zum Überqueren des ersten Hindernisses (5) basierend auf den Größendaten (214) und den Klassifizierungsdaten (225), und
Aktualisieren der Kartendaten (260) mit der dritten erforderlichen Traktionsfähigkeit (233) und der assoziierten maximalen Fahrgeschwindigkeit (236).

6. Computersystem (100) nach Anspruch 5, wobei die Verarbeitungsschaltung (110) ferner zu Folgendem konfiguriert ist:

Schätzen von Geschwindigkeiten des zweiten Fahrzeugs (20, 30) an den Positionen von Hindernissen (5) in den Routen-Kartendaten (245), und
Entfernen von Hindernissen (5) aus den Routen-Kartendaten (245), die eine assoziierte maximalen Fahrgeschwindigkeit (236) aufweisen, die niedriger ist als die geschätzte Geschwindigkeit des zweiten Fahrzeugs (20, 30) an Positionen des assoziierten Hindernisses (5), und wobei die dritte erforderliche Traktionsfähigkeit (133) des Hindernisses (5) niedriger ist als die Traktionsfähigkeit (255) des zweiten Fahrzeugs (20, 30).

7. Computersystem (100) nach einem der Ansprüche 1 bis 6, wobei die Verarbeitungsschaltung (110) ferner zu Folgendem konfiguriert ist:

Erlangen eines Zielorts (285) und eines aktuellen Standorts des zweiten Fahrzeugs (20, 30) innerhalb des begrenzten Geländes (1),
Bestimmen einer Route für das zweite Fahrzeug (20, 30) basierend auf einem aktuellen Standort des zweiten Fahrzeugs (20, 30), dem Zielort (285) und den Routing-Kartendaten (245), und
Bereitstellen der Route an das zweite Fahrzeug (20, 30).

8. Computersystem (100) nach einem der Ansprüche 1 bis 7, wobei die Klassifizierungsdaten (225) eine oder mehrere von einer Angabe eines Gewichts des ersten Hindernisses (5), einer Angabe einer Viskosität des ersten Hindernisses (5), einer Angabe einer Beweglichkeit des ersten Hindernisses (5), einer Angabe eines Typs des ersten Hindernisses (5); umfassen und/oder wobei die Größendaten (214) mindestens eines von einer Angabe einer Höhe des ersten Hindernisses (5), einer Angabe einer Tiefe des ersten Hindernisses (5) oder einer Angabe eines Umfangs des ersten Hindernisses (5) umfassen.

9. Computersystem (100) nach einem der Ansprüche 1 bis 8, wobei das begrenzte Gelände (1) mindestens einen Abschnitt eines Bergbaugebiets umfasst.

10. Computersystem (100) nach einem der Ansprüche 1 bis 9, wobei die Verarbeitungsschaltung (110) ferner zu Folgendem konfiguriert ist:

Erlangen von Positionsdaten (212) und Größendaten (214) des ersten Hindernisses (5) basierend auf Sensordaten (13') des Arbeitsanbaugeräts (15) des ersten Geländewagens (10).

11. Fahrzeug (10, 20, 30), umfassend das Computersystem (100) nach einem der Ansprüche 1 bis 10.

12. Computerimplementiertes Verfahren (300), umfassend:

Erlangen (310), durch eine Verarbeitungsschaltung (110) eines Computersystems (100), von Kartendaten (260) für Routenplanung innerhalb eines begrenzten Geländes (1),
Erlangen (320), durch die Verarbeitungsschaltung (110) des Computersystems (100), von Positionsdaten (212) und Größendaten (214) eines ersten Hindernisses (5) innerhalb des begrenzten Geländebereichs (1) basierend auf Sensordaten (13') eines ersten Geländewagens (10),
Erlangen (330) von Klassifizierungsdaten (225) des ersten Hindernisses (5), Bestimmen (340), durch die Verarbeitungsschaltung (110) des Computersystems (100), einer ersten erforderlichen Traktionsfähigkeit (231) zum Überqueren des ersten Hindernisses (5) basierend auf den Größendaten (214) und den Klassifizierungsdaten (225), und
Aktualisieren (350), durch die Verarbeitungsschaltung (110) des Computersystems (100), der Kartendaten (260) mit den Positionsdaten (212), den Größendaten (214) und der ersten erforderlichen Traktionsfähigkeit (231) des ersten Hindernisses (5),

das Verfahren ferner umfassend:

Erlangen, durch die Verarbeitungsschaltung (110) des Computersystems (100), einer Anforderung zur Routenplanung eines zweiten Fahrzeugs (20, 30), umfassend einen Indikator für eine Traktionsfähigkeit (255) des zweiten Fahrzeugs (20, 30),

Bestimmen, durch die Verarbeitungsschaltung (110) des Computersystems (100), von Routing-Kartendaten (245) für das zweite Fahrzeug (20, 30) basierend auf den Kartendaten (260), wobei Hindernisse (5), die eine erste erforderliche Traktionsfähigkeit (231) aufweisen, die niedriger als oder gleich wie die Traktionsfähigkeit (255) des zweiten Fahrzeugs (20, 30) ist, aus den Routing-Kartendaten (245) entfernt werden.

13. Computerprogrammprodukt (400), umfassend Programmcode (610), um das Verfahrens (300) von Anspruch 12 durchzuführen, wenn er durch eine Verarbeitungsschaltung (110) ausgeführt wird.

14. Nicht-transitorisches, computerlesbares Speichermedium (500), umfassend Anweisungen (610), die, wenn sie von einer Verarbeitungsschaltung (110) ausgeführt werden, die Verarbeitungsschaltung (110) veranlassen, das Verfahren (300) von Anspruch 12 durchzuführen.

**Revendications**

1. Système informatique (100) comprenant un circuit de traitement (110) configuré pour :

obtenir des données cartographiques (260) pour la planification d'itinéraire dans une zone hors route délimitée (1),

obtenir, sur la base de données de capteur (13') d'un premier véhicule tout-terrain (10), des données de position (212) et des données de taille (214) d'un premier obstacle (5) dans la zone hors route délimitée (1),

obtenir des données de classification (225) du premier obstacle (5),

déterminer une première capacité de traction requise (231) pour franchir le premier obstacle (5) sur la base des données de taille (214) et des données de classification (225), et

mettre à jour les données cartographiques (260) avec les données de position (212), les données de taille (214) et la première capacité de traction requise (231) pour franchir le premier obstacle (5)

dans lequel le circuit de traitement (110) est en outre configuré pour :

obtenir une demande de planification d'itinéraire d'un second véhicule (20, 30) comprenant un indicateur de la capacité de traction (255) du second véhicule (20, 30),

déterminer les données cartographiques d'itinéraire (245) pour le second véhicule (20, 30) sur la base des données cartographiques (260), dans lequel les obstacles (5) ayant une première capacité de traction requise (231) inférieure ou égale à la capacité de traction (255) du second véhicule (20, 30) sont supprimés des données cartographiques d'itinéraire (245).

2. Système informatique (100) selon la revendication 1, dans lequel le circuit de traitement (110) est en outre configuré pour obtenir les données de classification (225) sur la base de la prise en charge du premier obstacle (5) par un dispositif de travail (15) du premier véhicule tout-terrain (10).

3. Système informatique (100) selon l'une quelconque des revendications 1 et 2, dans lequel le circuit de traitement (110) est en outre configuré pour :

déterminer une deuxième capacité de traction requise (232) et une vitesse de déplacement minimale associée (235) pour franchir le premier obstacle (5) sur la base des données de taille (214) et des données de classification (225), et

mettre à jour les données cartographiques (260) avec la deuxième capacité de traction requise (232) et la vitesse de déplacement minimale associée (235).

4. Système informatique (100) selon la revendication 3, dans lequel le circuit de traitement (110) est en outre configuré pour :

estimer la vitesse du second véhicule (20, 30) aux positions des obstacles (5) des données cartographiques d'itinéraire (245), et

supprimer les obstacles (5) des données cartographiques d'itinéraire (245) ayant une vitesse de déplacement minimale associée (235) supérieure à la vitesse estimée du second véhicule (20, 30) aux positions de l'obstacle (5) associé et dans lequel la deuxième capacité de traction requise (232) de l'obstacle (5) est inférieure à la capacité de traction (255) du second véhicule (20, 30).

5. Système informatique (100) selon l'une quelconque des revendications 1 à 4, dans lequel le circuit de traitement (110) est en outre configuré pour :

déterminer une troisième capacité de traction requise (233) et une vitesse de déplacement maximale associée (236) pour franchir le premier obstacle (5) sur la base des données de taille (214) et des données de classification (225), et

mettre à jour les données cartographiques (260) avec la troisième capacité de traction requise (233) et la vitesse de déplacement maximale associée (236).

6. Système informatique (100) selon la revendication 5, dans lequel le circuit de traitement (110 ) est en outre configuré pour :

estimer la vitesse du second véhicule (20, 30) aux positions des obstacles (5) des données cartographiques d'itinéraire (245), et

supprimer les obstacles (5) des données cartographiques d'itinéraire (245) ayant une vitesse de déplacement maximale associée (236) inférieure à la vitesse estimée du second véhicule (20, 30) aux positions de l'obstacle (5) associé et dans lequel la troisième capacité de traction requise (133) de l'obstacle (5) est inférieure à la capacité de traction (255) du second véhicule (20, 30).

7. Système informatique (100) selon l'une quelconque des revendications 1 à 6, dans lequel le circuit de traitement (110) est en outre configuré pour :

obtenir une destination cible (285) et une position actuelle du second véhicule (20, 30) dans la zone hors route délimitée (1),

déterminer un itinéraire pour le second véhicule (20, 30) sur la base d'une position actuelle du second véhicule (20, 30), de la destination cible (285) et des données cartographiques d'itinéraire (245), et

fournir l'itinéraire au second véhicule (20, 30).

8. Système informatique (100) selon l'une quelconque des revendications 1 à 7, dans lequel les données de classification (225) comprennent au moins une ou plusieurs d'une indication du poids du premier obstacle (5), d'une indication de la viscosité du premier obstacle (5), d'une indication de la capacité de déplacement du premier obstacle (5), d'une indication du type du premier obstacle (5) ; et/ou dans lequel les données de taille (214) comprennent au moins l'une d'une indication de la hauteur du premier obstacle (5), d'une indication de la profondeur du premier obstacle (5) ou d'une indication de la circonférence du premier obstacle (5).

9. Système informatique (100) selon l'une quelconque des revendications 1 à 8, dans lequel la zone hors route délimitée (1) comprend au moins une partie d'un site minier.

10. Système informatique (100) selon l'une quelconque des revendications 1 à 9, dans lequel le circuit de traitement (110) est en outre configuré pour :
obtenir des données de position (212) et des données de taille (214) du premier obstacle (5) sur la base de données de capteur (13') du dispositif de travail (15) du premier véhicule tout-terrain (10).

11. Véhicule (10, 20, 30), comprenant le système informatique (100) selon l'une quelconque des revendications 1 à 10.

12. Procédé mis en œuvre par ordinateur (300), comprenant :

l'obtention (310), par un circuit de traitement (110) d'un système informatique (100), de données cartographiques (260) pour la planification d'itinéraire dans une zone hors route délimitée (1),

l'obtention (320), par le circuit de traitement (110) du système informatique (100), sur la base de données de capteur (13') d'un premier véhicule tout-terrain (10), de données de position (212) et de données de taille (214) d'un premier obstacle (5) dans la zone hors route délimitée (1),

l'obtention (330) de données de classification (225) du premier obstacle (5), la détermination (340), par le circuit de traitement (110) du système informatique (100), d'une première capacité de traction requise (231) pour franchir le premier obstacle (5) sur la base des données de taille (214) et des données de classification (225), et

la mise à jour (350), par le circuit de traitement (110) du système informatique (100), des données cartographiques (260) avec les données de position (212), les données de taille (214) et la première capacité de traction requise (231) du premier obstacle (5),

le procédé comprenant en outre :

l'obtention, par le circuit de traitement (110) du système informatique (100), d'une demande de planification d'itinéraire d'un second véhicule (20, 30) comprenant un indicateur d'une capacité de traction (255) du second véhicule (20, 30),

la détermination, par le circuit de traitement (110) du système informatique (100), de données cartographiques d'itinéraire (245) pour le second véhicule (20, 30) sur la base des données cartographiques (260), dans lequel les obstacles (5) ayant une première capacité de traction requise (231) inférieure ou égale à la capacité de traction (255) du second véhicule (20, 30) sont supprimés des données cartographiques d'itinéraire (245).

13. Produit de programme informatique (400) comprenant un code de programme (610) pour réaliser, lorsqu'il est exécuté par un circuit de traitement (110), le procédé (300) selon la revendication 12.

14. Support de stockage non transitoire lisible par ordinateur (500) comprenant des instructions (610) qui, lorsqu'elles sont exécutées par un circuit de traitement (110), amènent le circuit de traitement (110) à réaliser le procédé (300) selon la revendication 12.

FIG. 1

FIG. 2

FIG. 3

FIG. 4

FIG. 5

**FIG. 6**

**300**

**310**
Obtain map data

**320**
Obtain position and size data

**330**
Obtain classification data

**340**
Determining traction capability

**350**
Updating map data

**FIG. 7**

**600**

**610**

**500**

**400**

**FIG. 8**

FIG. 9

**FIG. 10**

EP 4 575 400 B1

**EP 4 575 400 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021396530 A1
- US 2020015401 A1
- DE 102011078292 A1
- GB 2562908 A